# EUROPEAN PATENT APPLICATION

(11) **EP 4 451 553 A1**
(43) Date of publication of application: **23.10.2024**
(21) Application number: 22905780.7
(22) Date of filing: 25.05.2022
(51) Int. Cl.: H02S 40/32, H02M 7/00

(54) **STRING-TYPE INVERSION-BOOST ALL-IN-ONE MACHINE AND POWER STATION SYSTEM**

(30) Priority: 13.12.2021 CN 202123121632 U
(71) Applicant: Sungrow Power Supply Co., Ltd., Hefei, Anhui 230088 (CN)
(72) Inventor: YAN, Longxiang, Hefei, Anhui 230088 (CN); GE, Xiangwen, Hefei, Anhui 230088 (CN)
(74) Representative: Rooney, John-Paul
(86) International application number: PCT/CN2022/094953
(87) International publication number: WO 2023/109012

(57) **Abstract**

Provided in the present application are a string-type inversion-boost all-in-one machine and a power station system. The string-type inversion-boost all-in-one machine comprises: a low-voltage switch, a boost device, and a plurality of string inversion units, wherein each string inversion unit, the low-voltage switch and the boost device are all arranged on a platform of the string-type inversion-boost all-in-one machine; an alternating-current side of each string inversion unit is electrically connected to the boost device by means of a low-voltage alternating-current bus and a low-voltage switch cabinet in sequence; and a direct-current wiring area of each string inversion unit is arranged on the outer side of the string-type inversion-boost all-in-one machine. Therefore, an inverter and the boost device are integrated together, and the onsite wiring of the string-type inversion-boost all-in-one machine is convenient and simple.

## Description

The present application claims the priority to Chinese Patent Application No. 202123121632.8, titled "STRING-TYPE INVERSION-BOOST ALL-IN-ONE MACHINE AND POWER STATION SYSTEM", filed on December 13, 2021 with the China National Intellectual Property Administration, which is incorporated herein by reference in its entirety.

### FIELD

The present application relates to the technical field of power conversion device, and in particular to a string-type inversion-boost all-in-one machine and a power station system.

### BACKGROUND

A large-scale photovoltaic ground power station generally has a large installed capacity and requires a large total power of an inverter. Currently, two types of inverters, namely a centralized inverter and a string inverter, are commonly used in the industry. In each of the two types of inverters, a boost device is needed to integrate a corresponding inverter into to a grid side.

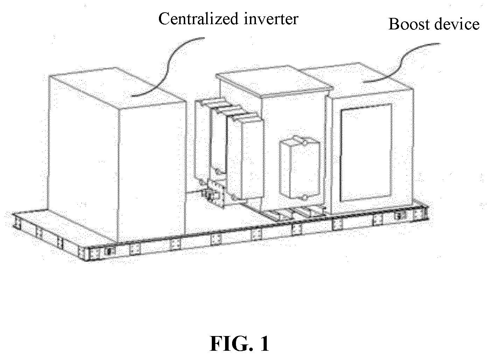

As shown in FIG. 1, when adopting the centralized inverter, due to a large power and a large volume of a single centralized inverter, it is usually integrated with the boost device into an all-in-one machine, which can reduce the electrical connection between an inversion device and the boost device on the power station site and reduce the construction cost.

However, there is currently no precedent for integration the inverter with the boost device when adopting the string inverter.

### SUMMARY

A string-type inversion-boost all-in-one machine and a power station system are provided according to embodiments of the present disclosure for integrating the inverter with the boost device. The on-site wiring of the string-type inversion-boost all-in-one machine is convenient and simple.

To achieve the above objectives, the following technical solutions are provided according to embodiments of the present disclosure.

In a first aspect of the present disclosure, a string-type inversion-boost all-in-one machine is provided. The string-type inversion-boost all-in-one machine includes a low-voltage AC bus, a low-voltage switch, a boost device, and multiple string inversion units. Each of the multiple string inversion units, the low-voltage AC bus, the low-voltage switch, and the boost device are arranged in sequence on a platform of the string-type inversion-boost all-in-one machine. An AC side of each of the multiple string inversion units is electrically connected to the boost device by means of the low-voltage AC bus and the low-voltage switch cabinet in sequence. A DC wiring area of each of the multiple string inversion units is arranged at an outer side of the string-type inversion-boost all-in-one machine.

In an embodiment, a maintenance passage is reserved between adjacent string inversion units.

In an embodiment, each of the multiple string inversion units is arranged parallel to a length direction of the string-type inversion-boost all-in-one machine, and the multiple string inversion units are arranged in an array on the platform of the string-type inversion-boost all-in-one machine.

In an embodiment, a low-voltage AC bus area is reserved in a transverse space in each of the multiple string inversion units for arranging the low-voltage AC bus, and a transverse direction refers to a length direction of the string-type inversion-boost all-in-one machine.

In an embodiment, the multiple string inversion units are arranged in two rows, and a reserved area between the two rows is used as a low-voltage AC bus wiring area.

In an embodiment, string inversion units in a same row is evenly arranged.

In an embodiment, each of the multiple string inversion units includes a power conversion device, a mounting rack and the DC wiring area, the power conversion device is installed back-to-back at a top of the mounting rack, the DC wiring area is arranged on a side of the string inversion unit, and the DC wiring area is configured to implement on-site DC wiring of the string-type inversion-boost all-in-one machine.

In an embodiment, the power conversion device includes at least one string inverter.

In an embodiment, the power conversion device further includes at least one distributed combiner box, and each of the at least string inverter is connected to a corresponding distributed combiner box.

In an embodiment, the AC side of each of the multiple string inversion units is electrically connected to the low-voltage switch cabinet via a copper busbar.

In an embodiment, the low-voltage switch cabinet includes at least one main switch and a communication device, the main switch is configured to connect and disconnect each of the multiple string inversion units to the boost device, and the communication device is configured to collect communication data of each of the multiple string inversion units and upload the communication data to a master computer.

In a second aspect of the present disclosure, a power station system is provided. The power station system includes a renewable energy system and at least one string-type inversion-boost all-in-one machine according to any one of the embodiments in the first aspect of the present disclosure, where the renewable energy system is connected to a grid via the string-type inversion-boost all-in-one machine.

It can be understood from the above, the string-type inversion-boost all-in-one machine according to embodiments of the present disclosure includes a low-voltage switch, a boost device and multiple string inversion units. Each of the multiple string inversion units, the low-voltage AC bus, the low-voltage switch, and the boost device are arranged in sequence on a platform of the string-type inversion-boost all-in-one machine. An AC side of each of the multiple string inversion units is electrically connected to the boost device by means of the low-voltage AC bus and the low-voltage switch cabinet in sequence. A DC wiring area of each of the multiple string inversion units is arranged at an outer side of the string-type inversion-boost all-in-one machine. In this way, the inverter and boost device are integrated together, and the on-site wiring of the string-type inversion-boost all-in-one machine is convenient and simple.

### BRIEF DESCRIPTION OF THE DRAWINGS

In order to illustrate technical solutions according to embodiments of the present disclosure or the conventional technology more clearly, drawings referred to describe the embodiments will be briefly described hereinafter. Apparently, the drawings in the following description are only some examples of the present disclosure, and for those skilled in the art, other drawings may be obtained based on these drawings without any creative efforts.
FIG. 1 is a schematic view of a centralized inverter according to the conventional technology;
FIG. 2 is a schematic view of a string-type inversion-boost all-in-one machine according to an embodiment of the present disclosure;
FIG. 3 is a schematic view of a string-type inversion-boost all-in-one machine according to another embodiment of the present disclosure;
FIG. 4 is an isometric view of a string-type inversion-boost all-in-one machine according to an embodiment of the present disclosure;
FIG. 5 is a schematic view of a string inversion unit of a string-type inversion-boost all-in-one machine according to an embodiment of the present disclosure; and
FIG. 6 is a schematic view of a power station system according to an embodiment of the present disclosure.

### DETAILED DESCRIPTION OF THE EMBODIMENTS

Technical solutions in the embodiments of the present disclosure will be clearly and completely described below in conjunction with the accompanying drawings of embodiments of the present disclosure. Obviously, the embodiments described below are merely some, but not all, of the embodiments of the present disclosure. Based on the embodiments of the present disclosure, all other embodiments obtained by those skilled in the art without creative efforts fall within the scope of protection of the present disclosure.

In the present disclosure, the terms "comprise," "include," or any other variation thereof, are intended to cover a non-exclusive inclusion, such that a process, method, article, or apparatus that comprises a list of elements includes not only those elements but also other elements that are not listed explicitly or elements that are inherent to such a process, method, article, or device. Without further limitations, an element that is defined by the phrase "comprise a/an ... ", does not exclude the presence of additional identical elements in the process, method, article, or device.

A string-type inversion-boost all-in-one machine is provided according to an embodiment of the present disclosure to solve the problem that there is no precedent for integrating an inverter with a boost device.

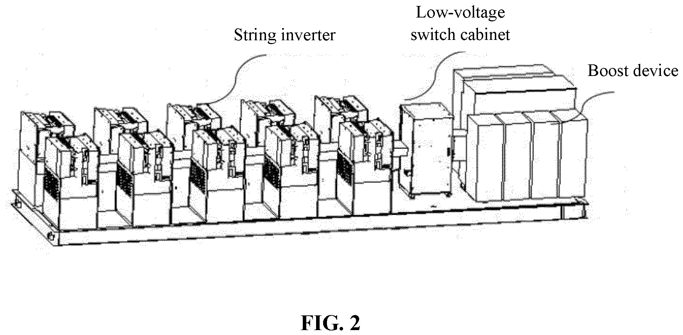

As shown in FIG. 2, the string-type inversion-boost all-in-one machine includes a low-voltage AC bus, a low-voltage switch, a boost device and multiple string inversion units.

In an embodiment, the string-type inversion-boost all-in-one machine includes four portions, that is, a certain number of string inversion units, the low-voltage AC bus, the low-voltage switch cabinet and the boost device.

It should be noted that, the number of the string inversion units is not specifically limited herein, and may be determined according to the actual situation, all of which are within the scope of protection of the present disclosure.

Each string inversion unit, the low-voltage AC bus, the low-voltage switch, and the boost device are arranged in sequence on a platform of the string-type inversion-boost all-in-one machine.

Specifically, as shown in FIG. 2, the multiple string inversion units are integrated as a whole, namely, an inversion area. The inversion area is arranged at a left side of the platform, the boost device is arranged at a right side of the platform, and the low-voltage switch is arranged between the inversion area and the boost device.

The sequence of the multiple string inversion units, the low-voltage switch and the boost device may be changed, which is not shown in the drawings. For example, the inversion area is arranged at the right side of the platform, the boost device is arranged at the left side of the platform, and the low-voltage switch is arranged between the inversion area and the boost device.

The above arrangements are merely illustrative, and other arrangements are not described in detail herein for simplicity, all of which are within the scope of protection of the present disclosure.

An AC side of each string inversion unit is electrically connected to the boost device by means of the low-voltage AC bus and the low-voltage switch cabinet in sequence.

Specifically, the AC side of each string inversion unit is connected to the low-voltage AC bus. The low-voltage AC bus is further connected to an end of the low-voltage switch cabinet, and the other end of the low-voltage switch cabinet is connected to the boost device. In embodiments of the present disclosure, the connection relationship between various components is electrical connection.

That is to say, a direction of a power flow may be: the string inversion unit - the low-voltage AC bus - the low-voltage switch cabinet - the boost device.

A DC wiring area of each string inversion unit is arranged at an outer side of the string-type inversion-boost all-in-one machine.

It should be noted that, a DC side of each string inversion unit is connected to the DC wiring area of a corresponding string inversion unit itself. Therefore, the connection relationship on the DC side of the corresponding string inversion units can be achieved by wiring in the DC wiring area.

That is to say, after integration of the string-type inversion-boost all-in-one machine, wiring can be achieved on the DC side of each string inversion unit by setting the DC wiring area arranged at the outer side of the string-type inversion-boost all-in-one machine.

According to embodiments of the present embodiment, the inverter is integrated with the boost device, and the on-site wiring of the string-type inversion-boost all-in-one machine is convenient and simple.

It should be noted that there is no precedent for integrating the inverter with the boost device in conventional technology, and the reasons are as follows: due to the functional characteristics and structural limitations of the string inverter, when a certain number of inverters are integrated with the boost device, it is needed to enter the integration platform for the DC wiring on site in the power station, which makes on-site wiring difficult; moreover, its advantages arise only if the number of the string inverters reaches a certain value, since the stand-alone power of the string inverter is relatively small, and the construction cost for the power station is high when a single string inverter is integrated with the boost device.

In the embodiments of the present disclosure, the DC wiring area of each string inversion unit is arranged at the outer side of the string-type inversion-boost all-in-one machine. That is, after integration, the DC wiring inside the platform is not needed any more, and the DC wiring can be achieved in the outer side of the string-type inversion-boost all-in-one machine instead, which ensures that the on-site wiring is simple. In addition, a certain number of the string inverters are integrated with the low-voltage switch cabinet and the boost device into the string-type inversion-boost all-in-one machine, which reduces the on-site electrical connection construction of the power station.

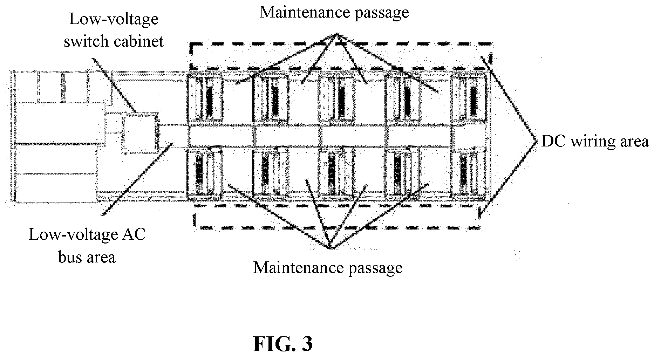

In practical use, as shown in FIG. 3, a maintenance and repair passage is reserved between adjacent string inversion units (the maintenance passage as shown in FIG. 3).

It should be noted that a reserved space for the maintenance and repair passage is larger than a preset space, so as to reserve sufficient maintenance passage between the adjacent inversion units for easy maintenance and repair.

The size of the preset space is not specifically limited herein, and may be determined according to the actual situation, all of which are within the scope of protection of the present disclosure.

The size of each maintenance and repair passage may be consistent, or it can be at least two maintenance and repair passages with different sizes, which is not specifically limited herein, and may be determined according to the actual situation, all of which are within the scope of protection of the present disclosure.

As shown in FIG. 3, the string inversion units are arranged in two rows, and the maintenance and repair passage is reserved between adjacent string inversion units in the same row. There may be or may not be a maintenance and repair passage between adjacent string inversion units in different rows, as long as each string inversion unit is provided with a maintenance and repair passage for on-site maintenance and repair.

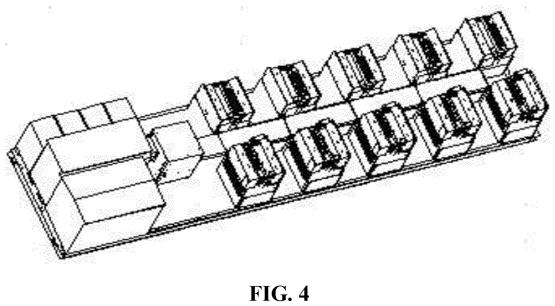

As shown in FIG. 4, which shows an isometric view of a string-type inversion-boost all-in-one machine, the structure, installation, and use of the machine can be illustrated taking the isometric view as an auxiliary drawing.

In practical use, each string inversion unit is arranged parallel to a length direction of the string-type inversion-boost all-in-one machine, and the multiple string inversion units are arranged in an array on the platform of the string-type inversion-boost all-in-one machine.

Specifically, each string inversion unit is arranged adjacently, and then the multiple string inversion units are arranged in an array parallel to the length direction of the string-type inversion-boost all-in-one machine on the platform of the string-type inversion-boost all-in-one machine.

Therefore, the DC wiring area of each string inversion unit can be easily arranged at the outer side of the string-type inversion-boost all-in-one machine.

In practical use, the string inversion units are arranged in two rows, and each row is arranged at a corresponding side of the string-type inversion-boost all-in-one machine. Specifically, as shown in FIG. 3, the two sides parallel to the length direction is taken as a front side and a back side, and the two sides perpendicular to the length direction is taken as a left side and a right side. One row of the string inversion units is arranged at the front side of the string-type inversion-boost all-in-one machine, such that a DC wiring area of this row of the string inversion units is arranged at the outer side of the front side. The other row of the string inversion units is arranged at the back side of the string-type inversion-boost all-in-one machine, such that a DC wiring area of this row of the string inversion units is arranged at the outer side of the back side.

In practical use, the string inversion units in a same row are evenly distributed.

That is to say, the spaces between string inversion units in the same row are equal, namely, the sizes of the maintenance and repair passages between adjacent string inversion units in the same row are equal.

In practical use, a low-voltage AC bus area is reserved in a transverse space in each string inversion unit for arranging the low-voltage AC bus, and a transverse direction refers to a length direction of the string-type inversion-boost all-in-one machine.

That is to say, a line connecting the string inversion units is parallel to the length direction. Therefore, the area, in which the low-voltage AC bus is arranged, can be small and simple if it is parallel to the length direction.

In practical use, a reserved area between the two rows is used as the low-voltage AC bus wiring area.

That is, when the string inversion units are arranged in two rows, the low-voltage AC bus wiring area is arranged between the two rows, so as to reduce the distance from each row to the low-voltage AC bus wiring area, namely, to reduce the length of the wiring.

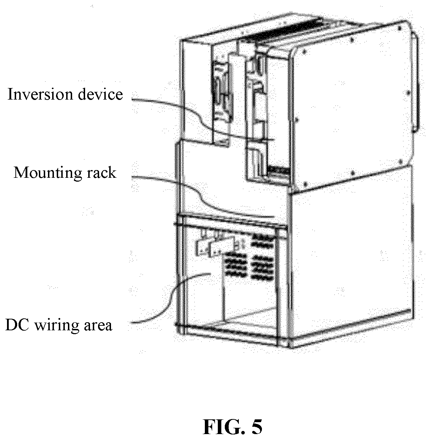

In practical use, as shown in FIG. 5, the string inversion unit includes: a power conversion device, a mounting rack and the DC wiring area.

The power conversion device is installed back-to-back at a top of the mounting rack.

The power conversion device may be an inversion device, or a combiner box, or a combination of the inversion device and the combiner box, which is not specifically limited herein, and may be determined according to the actual situation, all of which are within the scope of protection of the present disclosure.

The DC wiring area is arranged on a side of the string inversion unit.

The DC wiring area is configured to implement on-site DC wiring of the string-type inversion-boost all-in-one machine.

It should be noted that an AC side of the power conversion device, which is used as the AC side of the string inversion unit, is connected to the boost device via the low-voltage AC bus and the low-voltage switch cabinet in sequence.

A DC side of the power conversion device, which is used as the DC side of the string inversion unit, is connected to the DC wiring area.

In the present embodiment, a corresponding number of the power conversion devices are installed back-to-back in combination, which leads to a compact structure, such that the power conversion devices can be maximum integrated with the low-voltage switch cabinet and the boost device onto the same platform, which makes the on-site construction convenient and reduces the on-site electrical connection.

In practical use, the power conversion device includes at least one string inverter.

Specifically, the relationship between the inverters may be series, for example, the inverters are connected in series in sequence. The relationship between the inverters may be parallel, for example, the inverters are connected in parallel. The relationship between the inverters may be series and parallel, for example, some of the inverters are connected in series, and other of the inverters are connected in parallel.

The connection between the inverters is configured to ensure that an AC side is connected to another AC side, and a DC side is connected to another DC side.

The connection relationship between the inverters is not specifically limited herein, and may be determined according to the actual situation, all of which are within the scope of protection of the present disclosure.

It is also worth noting that an AC side after connecting the string inverters, which is used as the AC side of the power conversion device, is connected to the boost device via the low-voltage AC bus and the low-voltage switch cabinet in sequence.

A DC side after connecting the string inverters, which is used as the DC side of the power conversion device, is connected to the corresponding DC wiring area.

In practical use, the power conversion device further includes at least one distributed combiner box.

Each string inverter is connected to the corresponding distributed combiner box.

Specifically, according to the above descriptions, there are multiple connection relationships between the string inverters, thus there are multiple relationships between the string inverter and the distributed combiner box.

When the number of the distributed combiner box is one, one side of the distributed combiner box is connected with a DC side of the string inverters after connected as above, and the other side of the distributed combiner box is used as the DC side of the power conversion device.

In practical use, the AC side of each string inversion unit is electrically connected to the low-voltage switch cabinet via a copper busbar.

That is to say, the copper busbar, which is used as the low-voltage AC bus, is connected with the AC side of each string inversion unit and the low-voltage switch cabinet respectively.

It should be noted that, in conventional technology, the AC output of the string inverter is electrically connected to the boost device via a cable, which has a high cost and a risk of ageing, requiring regular maintenance.

In embodiments of the present disclosure, the AC side of the string inversion unit is connected to the boost device via the copper busbar, which reduces the cost for direct materials, and reduces the maintenance cost at a later stage of the power station.

In practical use, the low-voltage switch cabinet includes at least one main switch and a communication device.

The main switch is configured to connect and disconnect each string inversion unit to the boost device.

The communication device is configured to collect communication data of each string inversion unit and upload the communication data to a master computer.

When there are multiple main switches, at least one of the series connection and the parallel connection may be applied to each switch, which is not specifically limited herein, and may be determined according to the actual situation, all of which are within the scope of protection of the present disclosure.

The main switch provides electrical protection for the string inversion units by connecting and disconnecting each string inversion unit to the boost device.

A power station system is provided according to another embodiment of the present disclosure.

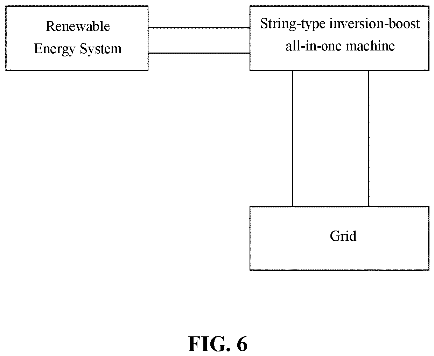

As shown in FIG. 6, the power station system includes a renewable energy system and at least one string-type inversion-boost all-in-one machine.

The renewable energy system is connected to a grid via a corresponding string-type inversion-boost all-in-one machine.

Specific operating processes and principles of the string-type inversion-boost all-in-one machine are detailed in the above embodiments, as shown in FIGS. 2 to 5, which will not be repeated here and are all within the protection scope of the present disclosure.

The renewable energy system may be a wind power generation system or a photovoltaic power generation system, or may be a hybrid energy system combining a wind power generation system and a photovoltaic power generation system.

The specific selection of the renewable energy system is not specifically limited herein, and may be determined according to the actual situation, all of which are within the scope of protection of the present disclosure.

For same or similar parts of the embodiments, references can be made to the embodiment mutually, while each embodiment focuses on a difference from other embodiments. Particularly, for a system or system embodiment, since it is substantially similar to the method embodiment, the description is relatively simple. Relevant parts may refer to part of the description of the method embodiments. The systems and system embodiments described above are only illustrative, and the units described as separate components may or may not be physically separated, and the components illustrated as units may or may not be physical units, i.e. they may be located in a place, or may be distributed to multiple network elements. Part or all of the modules can be selected according to actual needs to achieve the object of the solution of this embodiment. It can be understood and implemented by those skilled in the art without creative effort.

Those skilled in the art may further realize that the units and algorithm steps of the examples described in conjunction with the embodiments disclosed herein may be implemented by electronic hardware, computer software or a combination of the two. In order to clearly illustrate the interchangeability of the hardware and the software, the composition and steps of each example have been generally described according to their functions in the above description. Whether the functions are executed by hardware or software depends on the specific application and design constraints of the technical solution. Those skilled in the art may use different methods to implement the described functions for each specific application, but such implementation should not be regarded as exceeding the scope of the present disclosure.

The above descriptions of the disclosed embodiments are provided to enable those skilled in the art to implement or use the present disclosure. Various modifications to the embodiments will be apparent to those skilled in the art. General principles defined herein may be implemented in other embodiments without departing from the spirit or scope of the present disclosure. Therefore, the present disclosure will not be limited to the embodiments shown herein, but is to conform to the widest scope consistent with the principles and novel features disclosed herein.

## Claims

1. A string-type inversion-boost all-in-one machine, comprising: a low-voltage AC bus, a low-voltage switch, a boost device, and a plurality of string inversion units, wherein
each of the plurality of string inversion units, the low-voltage AC bus, the low-voltage switch, and the boost device are arranged in sequence on a platform of the string-type inversion-boost all-in-one machine;
an AC side of each of the plurality of string inversion units is electrically connected to the boost device by means of the low-voltage AC bus and the low-voltage switch cabinet in sequence; and
a DC wiring area of each of the plurality of string inversion units is arranged at an outer side of the string-type inversion-boost all-in-one machine.

2. The string-type inversion-boost all-in-one machine according to claim 1, wherein a maintenance passage is reserved between adjacent string inversion units.

3. The string-type inversion-boost all-in-one machine according to claim 1, wherein each of the plurality of string inversion units is arranged parallel to a length direction of the string-type inversion-boost all-in-one machine, and the plurality of string inversion units are arranged in an array on the platform of the string-type inversion-boost all-in-one machine.

4. The string-type inversion-boost all-in-one machine according to claim 3, wherein a low-voltage AC bus area is reserved in a transverse space in each of the plurality of string inversion units for arranging the low-voltage AC bus, wherein a transverse direction refers to a length direction of the string-type inversion-boost all-in-one machine.

5. The string-type inversion-boost all-in-one machine according to claim 4, wherein the plurality of string inversion units are arranged in two rows.

6. The string-type inversion-boost all-in-one machine according to claim 5, wherein a reserved area between the two rows is used as a low-voltage AC bus wiring area.

7. The string-type inversion-boost all-in-one machine according to claim 5, wherein a plurality of string inversion units in a same row is evenly arranged.

8. The string-type inversion-boost all-in-one machine according to claim 1, wherein each of the plurality of string inversion units comprises: a power conversion device, a mounting rack and the DC wiring area;
the power conversion device is installed back-to-back at a top of the mounting rack;
the DC wiring area is arranged on a side of the string inversion unit; and
the DC wiring area is configured to implement on-site DC wiring of the string-type inversion-boost all-in-one machine.

9. The string-type inversion-boost all-in-one machine according to claim 8, wherein the power conversion device comprises at least one string inverter.

10. The string-type inversion-boost all-in-one machine according to claim 9, wherein the power conversion device further comprises at least one distributed combiner box, and each of the at least string inverter is connected to a corresponding distributed combiner box.

11. The string-type inversion-boost all-in-one machine according to any one of claims 1 to 10, wherein the AC side of each of the plurality of string inversion units is electrically connected to the low-voltage switch cabinet via a copper busbar.

12. The string-type inversion-boost all-in-one machine according to any one of claims 1 to 10, wherein
the low-voltage switch cabinet comprises at least one main switch and a communication device;
the main switch is configured to connect and disconnect each of the plurality of string inversion units to the boost device; and
the communication device is configured to collect communication data of each of the plurality of string inversion units and upload the communication data to a master computer.

13. A power station system, comprising a renewable energy system and at least one string-type inversion-boost all-in-one machine according to any one of claims 1 to 12, wherein the renewable energy system is connected to a grid via the string-type inversion-boost all-in-one machine.
